# FASCICULE DE BREVET EUROPEEN

(11) **EP 1 567 324 B1**
(45) Date de publication et mention de la délivrance du brevet: **21.06.2006**
(21) Numéro de dépôt: 03786071.5
(22) Date de dépôt: 27.11.2003
(51) Int. Cl.: B29D 31/00, B41F 31/26, B41F 13/08

(54) **PROCEDE DE FABRICATION D'UN TUBE EN MATERIAU COMPOSITE ET TUBE OBTENU**
VERFAHREN ZUR HERSTELLUNG EINES ROHRES AUS VERBUNDWERKSTOFFEN UND HERGESTELLTES ROHR
METHOD OF PRODUCING A COMPOSITE MATERIAL TUBE AND TUBE THUS OBTAINED

(30) Priorité: 29.11.2002 FR 0215041
(43) Date de publication de la demande: 31.08.2005
(73) Titulaire: Epsilon Composite Sarl, 33340 Gaillan (FR)
(72) Inventeur: PORTOLES, José, F-33340 QUEYRAC (FR)
(74) Mandataire: Fantin, Laurent
(86) Numéro de dépôt international: PCT/FR2003/050135
(87) Numéro de publication internationale: WO 2004/050337

(56) Documents cités:
- EP-B- 0 487 549
- WO-A-99/17935
- US-A- 5 324 248

## Description

La présente invention concerne un procédé de fabrication d'un tube en matériau composite ainsi que le tube en matériau composite obtenu, notamment pour la réalisation de cylindres supports de manchon dans le domaine de l'impression.

Les industries de la transformation du papier et/ou du plastique, de l'impression commerciale de journaux et/ou d'emballages ainsi que l'ennoblissement textile requiert une amélioration de la productivité donc une augmentation des tailles de machines et de leurs vitesses de travail.

De tels machines comprennent essentiellement un châssis et des cylindres utilisés pour entraîner ou guider la bobine de matière à transformer mais aussi pour participer à cette transformation en enduisant, exprimant, laminant ou imprimant ladite matière.

Ces cylindres sont réalisés en acier ou en aluminium mais avec ces matériaux, on atteint la limite masse/inertie/rigidité nécessaire à l'amélioration de la production tout en conservant la qualité de la transformation.

Le recours à la fibre de carbone a permis de répondre en partie à ces contraintes de vitesse et de laize.

Ainsi, en impression flexographique, la vitesse est passée de 150 à 250 m/min et la laize est passée de 900 à 1200 mm.

Quant aux rotatives pour l'impression de journaux, elles travaillent sur 6 pages de large soit 2 000 mm de largeur et à une vitesse de 15 m/s.

Par contre la fabrication des cylindres à base de fibres de carbone utilise les méthodes dites par enroulement filamentaire qui nécessitent de, nombreuses étapes. Les coûts sont élevés et les fabrications généralement à l'unité, induisant des délais de réalisation incompatibles avec les besoins des utilisateurs des machines à cylindres.

L'exemple retenu pour la description d'un mode particulier de réalisation selon l'invention est la fabrication d'un cylindre en matériau composite applicable notamment à l'industrie de la transformation du papier, plus particulièrement l'impression d'emballage, sans qu'un tel exemple puisse être considéré comme limitatif.

De tels cylindres sont prévus pour recevoir des manchons d'impression ainsi qu'il ressort du document US-A-5,324,248. Dans ce domaine, les déformations du support de clichés conduisent vite à des défauts non acceptables et surtout, la vitesse de travail très importante des machines, provoque rapidement des pertes importantes de matière.

Dans le domaine de l'impression, notamment en flexographie, il est prévu des cylindres, un par couleur, qui supportent un ou plusieurs clichés. Ces clichés reçoivent une quantité d'encre très précise au contact d'un cylindre encreur, encre qui est déposée sur le support papier, carton ou film polymère par contact. Le cliché est généralement rapporté sur un manchon pouvant être réalisé également en matériau composite.

Ce contact, dit aussi touche, est donc extrêmement précis et dépend de nombreux paramètres relatifs au cliché et au manchon.

Le manchon est monté sur un cylindre support qui fait partie de la machine et qui est soumis aux moyens d'entraînement. De tels cylindres sont généralement creux et réalisés en acier car il faut limiter les déformations notamment les déformations sous charge et le faux-rond qui seraient intégralement reportées sur le manchon et qui seraient préjudiciables à la qualité de l'impression.

Ces défauts sont amplifiés par la vitesse de rotation élevée de ces cylindres.

De même, dans le cas de l'impression, la laize, en augmentant, provoque aussi l'augmentation de la flèche.

De plus, ces cylindres en acier sont d'un poids élevé et nécessitent généralement des moyens de levage pour leur mise en place.

Dans le cas de petites laizes, les déformations sont principalement provoquées par l'ovalisation du cylindre sous les effets de la pression de contact.

Devant ces problèmes, la présente invention propose un procédé de fabrication d'un tube en matériau composite qui pallie les inconvénients de l'art antérieur et qui présente notamment une grande raideur.

D'autres avantages du tube obtenu selon le procédé apparaîtront dans les modes de réalisation retenus.

A cet effet, le procédé de fabrication d'un tube selon l'invention se caractérise en ce qu'il comprend les étapes suivantes :
- préparer un tube extérieur en un premier matériau,
- préparer au moins un tube intérieur en un deuxième matériau, et
- disposer des entretoises au moins entre le tube extérieur et le premier des tubes intérieurs, régulièrement réparties, ces entretoises étant réalisées en matériau composite.

Les entretoises sont introduites en force dans le ou les espace(s) inter-tubes.

Selon un perfectionnement, on introduit de la résine ou un mélange de résines entre les deux tubes pour noyer les entretoises, combler les interstices, et assurer également une liaison des deux tubes en rotation.

Afin d'obtenir les résultats qui vont être indiqué ci-après, les tubes et les entretoises sont réalisées en un matériau composite à base de fibres de carbone à très haut module, obtenues par pultrusion.

Le procédé prévoit aussi une étape pour éliminer le faux-rond dans le cas d'une injection de résine. Dans ce cas, après injection et avant polymérisation de ladite résine, on repère le point maximum de faux-rond et on exerce sur ce point un effort ciblé pour ramener le tube à la rectitude recherchée, on attend la réticulation de la résine, on interrompt l'effort ciblé et on retire le tube.

De préférence, les entretoises sont obtenues à partir de profilés plats réalisés à partir de fibres de carbone à très haut module mises en oeuvre par pultrusion et découpés en fonction de l'espace inter-tubes.

Les entretoises peuvent aussi être réalisées en forme adaptée en fonction de l'espace inter-tubes pour réaliser des secteurs.

L'invention couvre aussi le tube obtenu.

Le procédé selon la présente invention est maintenant décrit en détail en regard des dessins schématiques qui représentent :
- figures 1A et 1B, deux vues en perspective et en coupe, d'un premier mode de réalisation d'un tube selon l'invention,
- figure 2, un tableau récapitulatif des caractéristiques obtenues,
- figure 3, une vue d'un second mode de réalisation avec des entretoises conformées, et
- figure 4, une vue de moyens de centrage des deux tubes.

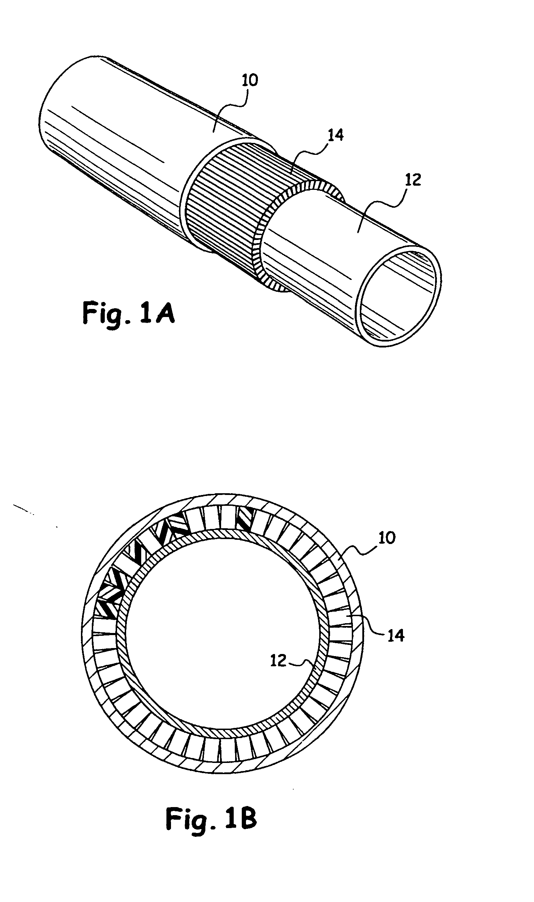

Sur la figure 1, on a représenté le résultat de la mise en oeuvre du procédé selon la présente invention.

Ce procédé consiste à réaliser un tube composite avec une âme support d'une grande rigidité permettant de recevoir un tube extérieur de nature appropriée.

Ce procédé consiste à :
- préparer un tube 10 extérieur en un premier matériau,
- préparer au moins un tube 12 intérieur en un deuxième matériau, et
- disposer des entretoises 14 au moins entre le tube 10 extérieur et le premier des tubes intérieurs, c'est-à-dire celui qui est immédiatement adjacent de l'extérieur vers l'intérieur. Ces entretoises sont régulièrement réparties sur tout ou partie de cet espace inter tubes. Ces entretoises sont réalisé es en matériau composite.

Des entretoises peuvent être disposées entre les espaces inter tubes générés entre les éventuels autres tubes intérieurs, de la même façon, ces entretoises étant en matériau composite également.

Plus particulièrement, ces entretoises sont réalisées à partir de fibres de carbone par pultrusion.

Suivant un premier mode de réalisation, les deux tubes extérieur et intérieur préparés sont réalisés en un même matériau, également à base de fibres de carbone par pultrusion.

L'avantage est de pouvoir utiliser des tubes de diamètre standard et déjà produits industriellement. C'est pour cette raison que des tubes composites obtenus selon le procédé de la présente invention peuvent être envisagés en production industrielle, l'assemblage de tubes standards existants sur le marché permettant d'avoir des coûts pour les petites séries bien inférieurs aux coûts d'un tube de même épaisseur et de même caractéristiques qui serait réalisé par pultrusion directe.

Dans le premier mode de réalisation, les entretoises sont découpées à partir de profilés plats de matériau composite à base de fibres de carbone, l'épaisseur et la largeur de ces entretoises étant adaptées à l'espace libre généré entre les deux tubes coaxiaux dû aux différences de diamètre.

Le montage est obtenu par emboîtement de ces entretoises 14 entre le tube 10 extérieur et le premier tube 12 intérieur.

La disposition est nécessairement symétrique mais peut varier suivant la raideur recherchée.

Ainsi, les entretoises peuvent être placées à saturation de l'espace libre ou suivant une répartition régulière mais en laissant subsister des espaces libres.

De ce fait, on peut régler la raideur et renforcer le tube final en fonction des applications.

Afin de permettre une immobilisation des entretoises dans cet espace inter tubes, le procédé prévoit une étape d'injection d'une résine ou d'un mélange de résines entre les deux tubes, résine qui va noyer les entretoises et combler les interstices, en assurant également une parfaite liaison des deux tubes en rotation, supprimant tout effet de cisaillement.

On utilise ici le terme de résine car il s'agit de polymères mais on peut tout aussi bien parler de colle puisque c'est la fonction finale. Le terme résine ne doit pas être considéré comme limitatif mais relatif plus particulièrement à la famille des polymères.

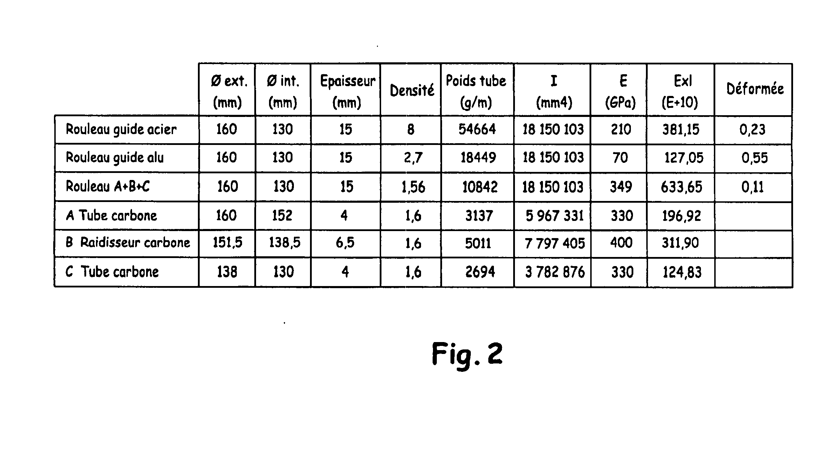

Le tube ainsi obtenu est particulièrement homogène. Dans ce premier mode de réalisation, le poids du tube est minimisé et les caractéristiques obtenues sont surprenantes et atteignent des valeurs très attractives. On peut constater les résultats obtenus qui sont regroupés dans le tableau comparatif de la figure 2.

Les essais correspondent à des tubes de même développement, 160 mm de diamètre extérieur et de même diamètre intérieur de 130 mm, et ceci en laize de 2500 mm.

Les matériaux comparés sont l'acier, l'aluminium et le carbone.

L'entretoise décrite dans la présente invention est réalisée par pultrusion, à partir de fibres de carbone dites à très haut module, commercialisées sous la marque Carbolam THM 400.

Cette fibre permet d'atteindre, avec l'agencement selon la présente invention les caractéristiques exceptionnelles et surprenantes indiquées ci-après.

On constate en comparaison que le tube obtenu en tout carbone par le procédé selon la présente invention pèse 5 fois moins que le même tube en acier pour un module E, 1,7 fois supérieur, atteignant 350 GPa.

Quant au tube tout carbone comparé à celui en aluminium, il pèse 2 fois moins que l'aluminium pour un module E, 5 fois plus élevé.

Quant à la déformée, elle est mesurée dans les conditions de l'essai, c'est-à-dire 3000 N répartis sur la laize en plus du poids propre.

Cette déformée est inférieure à 0,11 pour la réalisation tout carbone, de loin la plus faible. Elle atteint 0,23 pour l'acier et 0,55 pour l'aluminium.

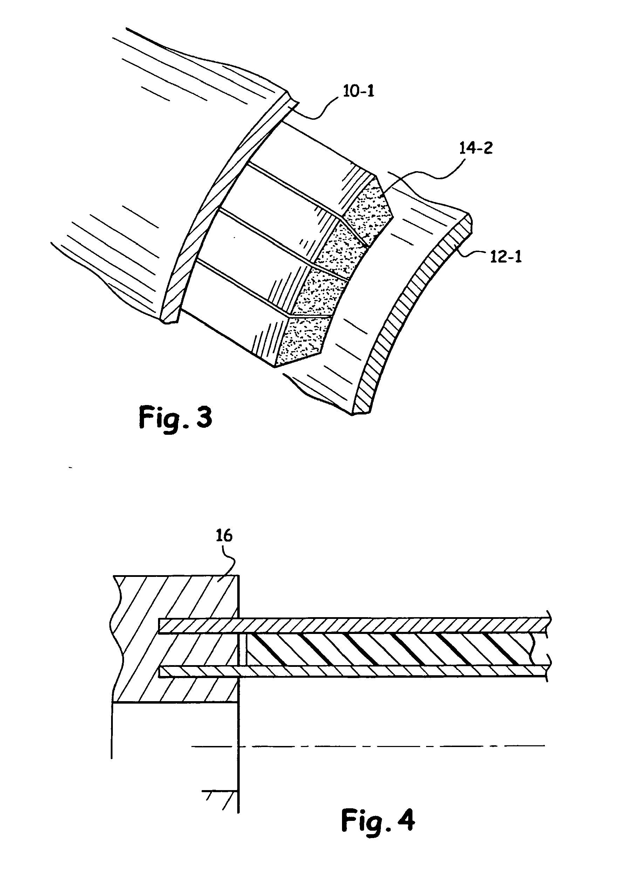

Dans le cas de la figure 3, le mode de réalisation consiste à pultruder des entretoises 14-1 en forme. Cette forme doit être optimisée en fonction des diamètres intérieur et extérieur pour être adaptée à l'espnce inter tubes prévu, entre les tubes 10-1 et 12-1, dans le cas d'un agencement à seulement deux tubes.

Dans ce cas, le remplissage de matière est optimisé et la quantité de résine est diminuée à son minimum. Il est tout à fait possible de supprimer la présence de résine, encore plus aisément que dans le premier mode de réalisation, car la surface de contact entre les entretoises et les deux tubes enveloppes extérieur et intérieur est encore augmentée.

On note que dans le cas d'un tube tout carbone la surface extérieure peut être enduite d'une résine de surface autorisant la rectification pour l'obtention d'un diamètre avec de grandes précisions et une réduction du faux rond dans les mêmes tolérances.

L'avantage du procédé selon la présente invention est de permettre la réalisation d'un support avec au moins un tube intérieur et des entretoises dans les espaces inter tubes, celles-ci étant réalisées en carbone pultrudé.

Quant au matériau du tube extérieur, l'utilisateur peut en choisir la nature, sans perdre notablement sur les caractéristiques du produit fini.

Ainsi, en fonction des applications, notamment si le tube extérieur doit recevoir un revêtement tel qu'une céramisation ou un traitement de surface, ce tube peut être choisi en un matériau métallique. C'est ainsi qu'un chromage de la surface extérieure du tube extérieur peut s'avérer tout à fait adapté pour recevoir lui-même des manchons support de clichés, en matériau composite.

En effet, le montage de ces manchons sur le tube support s'effectue par mise en pression du tube support et réalisation d'un film d'air sous pression entre le tube support et le manchon grâce à des ajutages ménagés à travers ledit tube support. Ce film d'air provoque une très légère dilatation du manchon, suffisante pour permettre son montage sur coussin d'air mais à condition que l'état de surface extérieure du tube extérieur et celui de la surface intérieure du manchon soient parfaits.

De plus, il faut que la qualité de cet état de surface subsiste au cours du temps et des montages et la dureté du chrome est parfaitement adéquate.

Cette possibilité de choix de la nature du tube extérieur est un avantage très important.

Il faut en effet pouvoir aller au-delà des valeurs actuelles de rigidité, sans changer les dimensions intérieures et extérieures des tubes, et en conservant les avantages des tubes supports de l'art antérieur. Les parcs manchons sont très importants et normalisés et il faut pouvoir les réutiliser.

L'intérêt de l'agencement selon l'invention est aussi de permettre une réduction du faux rond du tube dès la fabrication, durant l'étape d'introduction de la résine lorsque cette étape est réalisée.

On se reporte sur la figure 4 qui montre un gabarit qui assure un maintien en position des deux tubes de façon parfaitement coaxiale pour permettre une injection de résine.

Ce gabarit est monté sur des moyens 16 d'entraînement en rotation pour déterminer après injection et avant polymérisation le point maximum de faux rond.

Il convient alors d'exercer un effort ciblé sur ce point pour ramener le tube à la rectitude recherchée. Après réticulation de la résine, l'effort ciblé peut être interrompu et le tube conserve sa rectitude de fabrication.

Des essais ont montré que la précision de 3/10^{ème} obtenu e sur des tubes monolithiques traditionnels peut être réduite à 1/10^{ème}.

Ceci est tout à fait satisfaisant car la rectification peut être très précise avec un enlèvement de matière extrêmement réduit, dans tous les cas, au sein de la couche supérieure de finition.

Un autre problème contre lequel les tubes réalisés selon le procédé de la présente invention permettent de lutter, est la déformation par ovalisation. Dans le cas de petite laize de l'ordre du mètre, les efforts importants exercés sur une génératrice du tube conduisent à son ovalisation.

Les entretoises permettent d'obtenir une rigidification de la section du tube et de conserver une section circulaire.

Même si la flèche est un paramètre moins critique, l'agencement avec des entretoises qui forment un rayonnage plus ou moins dense permet de compenser ces déformations sous efforts.

Ainsi, en fonction des applications, on peut ajuster le nombre et la disposition des entretoises, la forme pour arriver à des résultats satisfaisants au meilleur coût.

Les tubes selon la présente invention contribue aussi à résoudre le problème des vibrations parasites générées dans le cas de machines tournantes.

Ainsi qu'indiqué, les vitesses linéaires de défilement atteintes peuvent aller jusqu'à 1 500 mètres/minute, ce qui conduit à des vitesses importantes de rotation et donc immanquablement à des vibrations.

Dans le cas de l'imprimerie par exemple, les vibrations provoquent des défauts nuisant fortement à la qualité, voire conduisant les produits au rebut.

Or la structure avec au moins un tube intérieur et des entretoises supportant un tube extérieur conduit à des ruptures de propagation, ne serait-ce que par le changement de nature de matériaux, ce qui évite au moins la transmission de fréquences identiques comme le font les matériaux monolithiques.

L'invention a été décrite avec une architecture comprenant deux tubes et des entretoises disposées dans l'espace inter tubes mais il est possible de prévoir un autre tube intérieur avec un nouveau jeu d'entretoises disposées dans le nouvel espace inter tubes ainsi réalisé.

Cet agencement peut présenter un intérêt pour lutter contre les vibrations, pour disposer d'un matériau métallique intérieur et extérieur ayant un état de surface chromé par exemple tout en obtenant les caractéristiques mécaniques indiquées ci-avant, impossibles à atteindre autrement.

Bien que d'autres agencements plus complexes puissent être envisagés avec un plus grand nombre de tubes, ils devront être réservés à des cas exceptionnel pour ne pas sortir du cadre d'industrialisation recherché dans le cas de la présente invention.

L'agencement selon l'invention présente également un grand intérêt dans certaines applications. En effet, outre le fait de permettre la lutte contre la flèche, les faux ronds, le poids et les vibrations, il est un autre problème celui de l'échauffement. Dans certaines applications, les frottements conduisent à des échauffements et les matériaux en carbone utilisés pour les tubes ne permettent pas de dissiper aisément la chaleur. Ce problème existe déjà dans le cas d'autres types de manchons, par exemple les manchons garnis de matériau élastomère.

De fait, il existe des moyens pour faire circuler un fluide caloporteur dans les manchons pour diffuser les calories et maintenir les manchons à la température adaptée, à travers des tubes.

On comprend que dans le cas des manchons fabriqués selon le procédé de la présente invention, il est possible d'alterner des canaux de circulation avec les entretoises dans l'espace inter tubes.

Ces canaux peuvent être réalisés par les entretoises elles-mêmes qui délimitent ces canaux ou par des canalisations rapportées entre ces entretoises, dans l'espace inter tubes.

La nature des matériaux utilisés pour la fabrication de telles canalisations sera choisie par l'homme de l'art en fonction des caractéristiques mécaniques, de transfert de chaleur ou de poids, par exemple, de ce matériau.

## Revendications

1. Procédé de fabrication d'un tube, tel qu'il comprend les étapes suivantes :
- préparer un tube (10) extérieur en un premier matériau,
- préparer au moins un (12) tube intérieur en un deuxième matériau, et
- disposer des entretoises (14) au moins entre le tube (10) extérieur et le premier des tubes (12) intérieurs, ces entretoises étant réalisées en matériau composite.

2. Procédé de fabrication d'un tube selon la revendication 1, **caractérisé en ce que** ces entretoises (14) sont régulièrement réparties sur tout ou partie de cet espace inter tubes.

3. Procédé de fabrication d'un tube selon la revendication 1 ou 2, **caractérisé en ce que** l'on introduit ces entretoises (14) en force dans l'espace inter tubes.

4. Procédé de fabrication d'un tube selon la revendication 1, 2 ou 3, **caractérisé en ce que** l'on introduit de la résine ou un mélange de résines entre les deux tubes (10, 12) pour noyer les entretoises (14), combler les interstices, et assurer également une liaison des deux tubes en rotation.

5. Procédé de fabrication d'un tube selon l'une quelconque des revendications précédentes, **caractérisé en ce que** l'on utilise pour la préparation des entretoises un matériau composite à base de fibres de carbone à très haut module, obtenu par pultrusion.

6. Procédé de fabrication d'un tube selon l'une quelconque des revendications précédentes, **caractérisé en ce que** l'on utilise pour la préparation d'au moins un des tubes un matériau composite à base de fibres de carbone à très haut module, obtenu par pultrusion.

7. Procédé de fabrication d'un tube selon l'une quelconque des revendications 4, 5 ou 6, **caractérisé en ce que**, pour éliminer le faux rond dans le cas d'une injection de résine, après injection et avant polymérisation de ladite résine, on repère le point maximum de faux rond, on exerce sur ce point un effort ciblé pour ramener le tube à la rectitude recherchée, on attend la réticulation de la résine, on interrompt l'effort ciblé et on retire le tube.

8. Procédé de fabrication d'un tube selon l'une quelconque des revendications précédentes, **caractérisé en ce que** les entretoises sont obtenues à partir de profilés plats réalisés à partir de fibres de carbone à très haut module mises en oeuvre par pultrusion et découpés en fonction de l'espace inter tubes.

9. Procédé de fabrication d'un tube selon l'une quelconque des revendications 1 à 7, **caractérisé en ce que** les entretoises sont réalisées en forme, en fonction de l'espace inter tubes, pour réaliser des secteurs.

10. Tube obtenu par la mise en oeuvre du procédé selon l'une quelconque des revendications précédentes, tel qu'il comprend :
- un tube (10) extérieur en un matériau métallique ou composite,
- au moins un tube (12) intérieur en un matériau métallique ou composite, et
- des entretoises (14) entre les deux tubes, régulièrement réparties, ces entretoises étant réalisées en matériau composite à base de fibres de carbone à très haut module, obtenues par pultrusion.

11. Tube selon la revendication 10, **caractérisé en ce que** au moins un des tubes extérieur (10) ou intérieur (12) est réalisé en matériau composite à base de fibres de carbone à très haut module et obtenu par pultrusion.

12. Tube selon l'une des revendications 10 ou 11, **caractérisé en ce que** les entretoises (14) sont espacées et délimitent des canaux de circulation d'un fluide caloporteur.

13. Tube selon l'une des revendications 10 ou 11, **caractérise en ce que** des canalisations de circulation d'un fluide caloporteur sont disposées entre les entretoises, dans l'espace inter tubes.

## Claims

1. A method of manufacturing a tube, comprising the following steps:
- preparing an external tube (10) made from a first material,
- preparing at least one internal tube (12) made from a second material, and
- disposing spacers (14) at least between the external tube (10) and the first of the internal tubes (12), these spacers being produced from composite material.

2. A method of manufacturing a tube according to claim 1, **characterised in that** the spacers (14) are regularly distributed over all or part of the inter-tube space.

3. A method of manufacturing a tube according to claim 1 or 2, **characterised in that** the spacers (14) are forcibly introduced into the inter-tube space.

4. A method of manufacturing a tube according to claim 1, 2 or 3, **characterised in that** a resin or a mixture of resins is introduced between the two tubes (10, 12) in order to embed the spacers (14), fill in the interstices, and also provide a connection of the two tubes in rotation.

5. A method of manufacturing a tube according to any one of the preceding claims, **characterised in that** a composite material based on carbon fibres with a very high modulus, obtained by pultrusion, is used for preparing the spacers.

6. A method of manufacturing a tube according to any one of the preceding claims, **characterised in that** a composite material based on carbon fibres with a very high modulus, obtained by pultrusion, is used for preparing at least one of the tubes.

7. A method of manufacturing a tube according to any one of claims 4, 5 or 6, **characterised in that**, in order to eliminate the out-of-roundness in the case of an injection of resin, after injection and before polymerisation of said resin, the maximum out-of-roundness point is located, a force is exerted on this point targeted so as to return the tube to the required straightness, the crosslinking of the resin is awaited, the targeted force is interrupted and the tube is removed.

8. A method of manufacturing a tube according to any one of the preceding claims, **characterised in that** the spacers are obtained from flat profiled sections produced from carbon fibres with a very high modulus used by pultrusion and cut according to the inter-tube space.

9. A method of manufacturing a tube according to any one of claims 1 to 7, **characterised in that** the spacers are produced in shape, according to the inter-tube space, in order to produce sectors.

10. A tube obtained by implementing the method according any one of the preceding claims, comprising:
- an external tube (10) made from metal or composite material,
- at least one internal tube (12) made from metal or composite material, and
- spacers (14) between the two tubes, regularly distributed, these spacers being produced from composite material based on carbon fibres with a very high modulus, obtained by pultrusion.

11. A tube according to claim 10, **characterised in that** at least one of the external (10) or internal (12) tubes is produced from a composite material based on carbon fibres with a very high modulus and obtained by pultrusion.

12. A tube according to one of claims 10 or 11, **characterised in that** the spacers (14) are spaced apart and delimit circulation channels for a heat-transfer fluid.

13. A tube according to one of claims 10 or 11, **characterised in that** heat-transfer fluid circulation channels are disposed between the spacers, in the inter-tube space.

## Patentansprüche

1. Verfahren zur Herstellung eines Rohres, umfassend die folgenden Schritte:
- Bereitstellen eines Außenrohres (10) aus einem ersten Werkstoff,
- Bereitstellen mindestens eines Innenrohres (12) aus einem zweiten Werkstoff, und
- Anordnen von Distanzhaltern (14) mindestens zwischen dem Außenrohr (10) und dem ersten der Innenrohre (12), wobei diese Distanzhalter aus einem Verbundwerkstoff hergestellt sind.

2. Verfahren zur Herstellung eines Rohres nach Anspruch 1, **dadurch gekennzeichnet, dass** diese Distanzhalter (14) regelmäßig verteilt über den gesamten bzw. über einen Teil dieses Zwischenraums zwischen den Rohren angeordnet werden.

3. Verfahren zur Herstellung eines Rohres nach Anspruch 1 oder 2, **dadurch gekennzeichnet, dass** diese Distanzhalter (14) in den Zwischenraum zwischen den Rohren zwangseingeführt werden.

4. Verfahren zur Herstellung eines Rohres nach Anspruch 1, 2 oder 3, **dadurch gekennzeichnet, dass** zum Einbetten der Distanzhalter (14), zum Ausfüllen der Spalte und auch zum Gewährleisten einer Drehverbindung zwischen den beiden Rohren Harz bzw. eine Harzmischung zwischen die beiden Rohre (10, 12) eingeführt wird.

5. Verfahren zur Herstellung eines Rohres nach einem der vorstehenden Ansprüche, **dadurch gekennzeichnet, dass** zur Bereitstellung der Distanzhalter ein durch Pultrusion erzielter Karbonfaser-Verbundwerkstoff mit sehr hohem Elastizitätsmodul verwendet wird.

6. Verfahren zur Herstellung eines Rohres nach einem der vorstehenden Ansprüche, **dadurch gekennzeichnet, dass** zur Bereitstellung mindestens eines der Rohre ein durch Pultrusion erzielter Karbonfaser-Verbundwerkstoff mit sehr hohem Elastizitätsmodul verwendet wird.

7. Verfahren zur Herstellung eines Rohres nach einem der Ansprüche 4, 5 oder 6, **dadurch gekennzeichnet, dass**, zur Entfernung des Rundlauffehlers im Falle einer Harzeinspritzung nach der Einspritzung und vor dem Aushärten des Harzes der Punkt des maximalen Rundlauffehlers ermittelt wird, auf diesen Punkt eine gezielte Kraft ausgeübt wird, um dem Rohr wieder die angestrebte Geradheit zu verleihen, die Vernetzung des Harzes abgewartet, die gezielte Ausübung der Kraft unterbrochen und das Rohr entnommen wird.

8. Verfahren zur Herstellung eines Rohres nach einem der vorstehenden Ansprüche, **dadurch gekennzeichnet, dass** die Distanzhalter aus Flachprofilen hergestellt werden, welche aus sehr hochmoduligen, durch Pultrusion erzielten Karbonfasern bestehen und in Abhängigkeit von dem Zwischenraum zwischen den Rohren abgelängt werden.

9. Verfahren zur Herstellung eines Rohres nach einem der Ansprüche 1 bis 7, **dadurch gekennzeichnet, dass** die Distanzhalter in Abhängigkeit von dem Zwischenraum zwischen den Rohren so geformt werden, dass sie Segmente bilden.

10. Rohr, hergestellt anhand des Verfahrens nach einem der vorstehenden Ansprüche, umfassend:
- ein Außenrohr (10) aus einem Metall- oder Verbundwerkstoff,
- mindestens ein Innenrohr (12) aus einem Metall- oder Verbundwerkstoff, und
- regelmäßig zwischen den Rohren verteilte Distanzhalter (14), wobei diese Distanzhalter aus einem durch Pultrusion erzielten Karbonfaser-Verbundwerkstoff mit sehr hohem Elastizitätsmodul hergestellt sind.

11. Rohr nach Anspruch 10, **dadurch gekennzeichnet, dass** mindestens eines der Rohre, das Außenrohr (10) oder das Innenrohr (12), aus einem durch Pultrusion erzielten Karbonfaser-Verbundwerkstoff mit sehr hohem Elastizitätsmodul hergestellt ist.

12. Rohr nach einem der Ansprüche 10 oder 11, **dadurch gekennzeichnet, dass** die Distanzhalter (14) voneinander beabstandet sind und Kühlmedium durchströmte Kanäle begrenzen.

13. Rohr nach einem der Ansprüche 10 oder 11, **dadurch gekennzeichnet, dass** in dem Zwischenraum zwischen den Rohren Kühlmedium durchströmte Kanäle zwischen den Distanzhaltern angeordnet sind.
